Europäisches Patentamt

European Patent Office

Office européen des brevets

(19)

(11) Numéro de publication: **0 014 107**
**B1**

(12)

# FASCICULE DE BREVET EUROPEEN

(45) Date de publication du fascicule du brevet:
**25.01.84**

(51) Int. Cl.³: **B 23 P 15/00**

(21) Numéro de dépôt: **80400007.3**

(22) Date de dépôt: **03.01.80**

(54) **Procédé de fabrication d'une douille cylindrique munie de rainures intérieures fermées à l'une au moins de leurs extrémités et douille ainsi obtenue.**

(30) Priorité: **16.01.79 FR 7900949**

(43) Date de publication de la demande:
**06.08.80 Bulletin 80/16**

(45) Mention de la délivrance du brevet:
**25.01.84 Bulletin 84/4**

(84) Etats contractants désignés:
**DE GB IT SE**

(56) Documents cités:
**GB - A - 771 256**
**US - A - 1 870 970**
**US - A - 2 382 349**

(73) Titulaire: **SOCIETE ANONYME D.B.A., Centre Paris Pleyel, F-93521 St-Denis Cédex 01 (FR)**

(72) Inventeur: **Carmel, Alfano, 29 bis rue Victor Hugo, F-95350 St. Brice sous Forêt (FR)**

(74) Mandataire: **Le Moenner, Gabriel et al, SERVICE BREVETS BENDIX 44, Rue François 1er, F-75008 Paris (FR)**

ACTORUM AG

**Procédé de fabrication d'une douille cylindrique munie de rainures intérieures fermées à l'une au moins de leurs extrémités, et douille ainsi obtenue**

La présente invention a pour objet un procédé de fabrication d'une douille cylindrique munie de rainures intérieures fermées à l'une au moins de leurs extrémités. L'invention concerne également toute douille obtenue par la mise en œuvre d'un tel procédé.

De telles douilles, munies de rainures d'orientation longitudinale droite ou faiblement inclinée fermées à l'une au moins de leurs extrémités sont notamment utilisées comme chemises de valves rotatives dans les mécanismes de direction assistée pour véhicules automobiles.

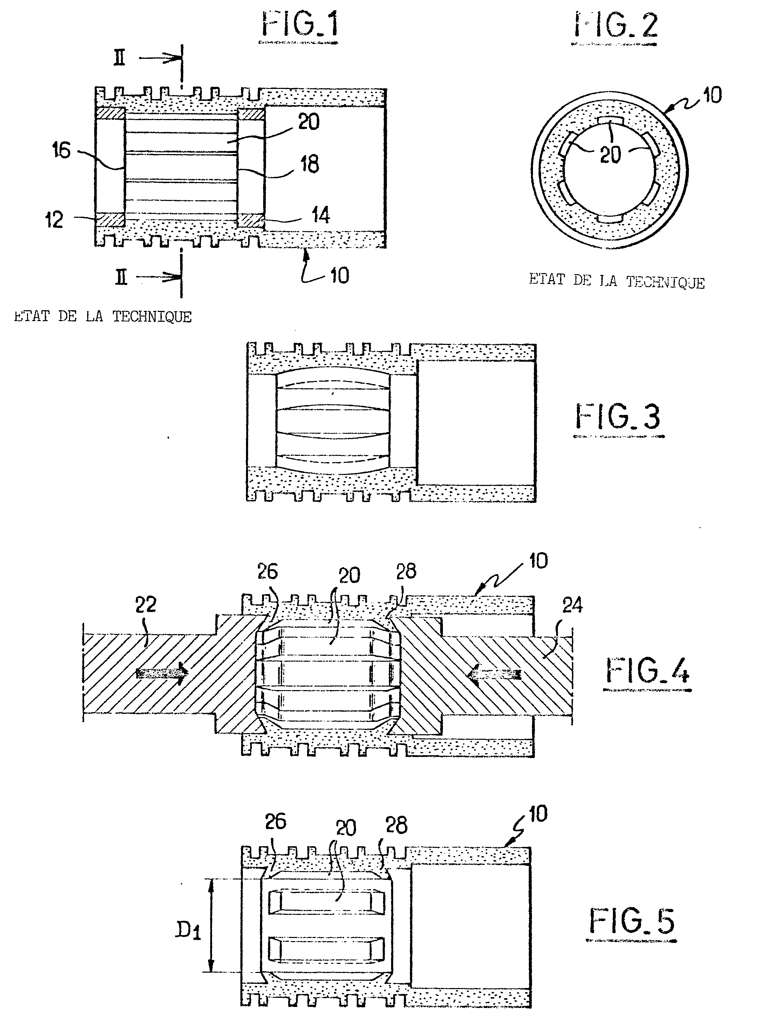

Un procédé connu d'usinage de telles douilles, et dont le produit est illustré aux figs 1 et 2 des dessins annexés dans le cas fréquent où les rainures doivent être fermées à leurs deux extrémités, consiste à former dans un premier temps ces rainures par brochage ou par passage d'un outil de coupe analogue le long d'un alésage de diamètre interne réduit de l'ébauche de douille qui est délimité par deux épaulements, en sorte que lesdites rainures débouchent au niveau de ces derniers. Les extrémités de ces rainures sont ensuite obturées grâce à la mise en place de deux anneaux de fermeture appliqués jointivement contre les épaulements précités et possédant le même diamètre intérieur que la douille terminée d'usinage. Pour obtenir une immobilisation certaine des anneaux de fermeture à l'intérieur de la douille, il est de pratique courante d'emmancher ceux-ci par contraction et dilatation thermique. Si ce procédé connu offre l'avantage de permettre un usinage facile et précis des rainures elles-mêmes par brochage, il présente cependant l'inconvénient de nécessiter des usinages supplémentaires précis pour les logements des anneaux de fermeture ainsi que pour ces anneaux eux-mêmes, ce qui grève lourdement le prix de revient et oblige à la tenue d'un stock indésirable de pièces en attente de montage. Le procédé risque en outre de provoquer des déformations de la pièce après l'emmanchement des anneaux.

Un autre procédé connu, et dont le produit est illustré par la fig. 3 des dessins annexés, consiste à former les rainures par taillage au moyen d'un outil de coupe mû selon une trajectoire curviligne grâce à une machine de conception appropriée, telle que par exemple celle décrite dans le brevet FR-A-2 004 355. Les rainures ne possèdent plus alors une profondeur constante et, du fait qu'elles ne débouchent pas au niveau des épaulements limitant l'alésage de diamètre réduit de la douille, il n'est plus nécessaire de prévoir d'anneaux de fermeture. Cet avantage n'est cependant obtenu qu'au prix d'une machine spéciale représentant un investissement appréciable, peu adaptée à des cadences de production élevées et incapable de garantir un usinage aussi précis des rainures que celui obtenu avec le procédé précédent.

La présente invention a pour objet de concevoir un procédé d'usinage qui, tout en permettant de conserver les avantages de précision et de rapidité de façonnage des rainures inhérents à leur exécution par brochage, évite le recours aux anneaux de fermeture et élimine ainsi les inconvénients liés à leur emploi.

Par ailleurs, on connaît du brevet US-A-1 870 970 un procédé de fabrication d'une douille à rainures internes dans lequel lesdites rainures sont fermées par rétrécissement radial des deux portions d'extrémité. Le brevet GB-A-771 256 divulgue en outre la façon de former les logements des aiguilles d'une cage de roulement par poinçonnage radial dans un manchon. Dans un même esprit, l'invention a pour but d'obtenir un manchon à rainures internes fermées dans lequel lesdites rainures sont fermées par déformation plastique du métal.

A cet effet, l'invention concerne donc un procédé de fabrication d'une douille cylindrique munie de rainures intérieures d'orientation longitudinale droite ou faiblement inclinée, fermées à l'une au moins de leurs extrémités, comprenant les étapes de définir un alésage axial dans une ébauche de douille en matériau déformable, de former des rainures, par exemple par brochage, dans l'alésage axial qui comporte au moins une face d'extrémité constituant un épaulement au niveau duquel les rainures débouchent, de refouler de la matière au niveau de l'épaulement en direction de l'axe de la douille par application d'une pression pour constituer une zone annulaire déformée dont la face intérieure est décalée vers l'axe d'une distance radiale supérieure à la profondeur des rainures que l'on désire obtenir, et d'aléser la douille au diamètre intérieur désiré en éliminant une partie de cette zone annulaire déformée; caractérisé en ce que ladite zone est déformée de manière à constituer un bourrelet annulaire interne en ce que la pression est appliquée longitudinalement en bout de la douille sur une zone annulaire de l'épaulement, le diamètre moyen de cette dernière zone étant supérieur au diamètre d'un cylindre dans lequel s'inscrivent sensiblement les fonds desdites rainures, et en ce que simultanément, la matière refoulée est guidée en direction de l'axe de la douille.

Les caractéristiques et avantages de l'invention ressortiront plus clairement de la lecture de la description suivante d'un mode d'exécution préférentiel, donné à titre d'exemple illustratif, faite en référence aux dessins annexés, dans lesquels:

— la fig. 1, déjà commentée ci-dessus, représente en coupe longitudinale une douille cylindrique munie de rainures intérieures droites fermées à leurs deux extrémités, cette douille utilisable comme chemise de valve rotative étant obtenue par application d'un premier procédé d'usinage connu;

— la fig. 2 est une coupe transversale de la douille de la fig. 1, prise selon les flèches II–II de la fig. 1;

— la fig. 3, déjà commentée elle aussi ci-dessus, illustre en coupe longitudinale et de manière analogue à la fig. 1 une douille cylindrique rainurée obtenue par application d'un second procédé d'usinage connu;

- les figs 4 et 5 représentent, également en coupe longitudinale, et respectivement en cours d'usinage et au terme de celui-ci, une douille cylindrique rainurée obtenue par application du procédé selon l'invention; et

- les figs 6A, 6B et 6C sont des représentations schématiques et à échelle fortement agrandie illustrant au moyen de trois vues successives le processus de refoulement de la matière qui aboutit à la fermeture de l'extrémité de la rainure, conformément au procédé de l'invention.

La mise en œuvre du procédé de l'invention suppose la préparation préalable d'une ébauche de douille 10 telle que celle illustrée à la fig. 1 des dessins annexés, mais naturellement dépourvue des anneaux de fermeture 12, 14 caractéristiques du premier procédé connu d'usinage qui a été évoqué ci-dessus. Cette ébauche de douille, qui est destinée à devenir une chemise de valve rotative, comporte un alésage de diamètre interne réduit qui est délimité par deux épaulements 16, 18. Dans cet alésage de diamètre réduit sont formées, de préférence par brochage, un certain nombre de rainures longitudinales, 20, au nombre de six et angulairement équidistantes, les unes des autres dans l'exemple considéré. A leurs extrémités, ces rainures débouchent dans le vide au niveau des épaulements 16 et 18. La hauteur radiale de ces rainures est choisie de façon telle que le cercle définissant la position de leurs fonds respectifs possède un diamètre légèrement inférieur au diamètre maximal des épaulements 16 et 18.

Pour fermer les extrémités des rainures 20 au niveau des épaulements 16 et 18, le procédé de l'invention prévoit de déformer ceux-ci par refoulement de matière en direction de l'axe de la douille, ceci de manière à constituer des bourrelets annulaires continus sur une hauteur radiale au moins égale à celle que devront présenter les rainures en fin d'usinage. La fig. 4 des dessins montre comment ce refoulement de matière peut être effectué, dans un mode d'exécution préférentiel du procédé de l'invention, au moyen de deux poinçons 22, 24 appliqués selon la direction axiale et en sens opposés sur les épaulements délimitant l'alésage de diamètre interne réduit de l'ébauche de douille 10. Le dessin montre clairement les bourrelets annulaires 26, 28 en cours de formation aux extrémités des rainures 20. La forme des poinçons, qui sera décrite de façon plus détaillée ci-après, est conçue de manière à ce que ces poinçons assurent un guidage efficace de la matière refoulée en direction de l'axe de la douille. Au terme de cette opération de refoulement de matière, et sous réserve que les bourrelets annulaires 26, 28 soient suffisamment relevés pour ne présenter aucune solution de continuité sur une hauteur radiale au moins égale à celle des rainures 20, il suffit alors d'aléser l'ébauche de douille 10 au diamètre intérieur définitif $D_1$ pour éliminer simultanément la partie superflue des bourrelets annulaires 26 et 28. La fig. 5 des dessins représente la douille 10 ainsi terminée d'usinage, et l'on voit que les rainures lingitudinales 20 sont effectivement fermées au niveau de leurs deux extrémités par des facettes d'orientation oblique qui ne sont autres que les flancs internes des bourrelets annulaires 26 et 28. Ainsi se trouve rendu inutile l'emploi d'anneaux de fermeture auquel on recourait jusqu'à présent.

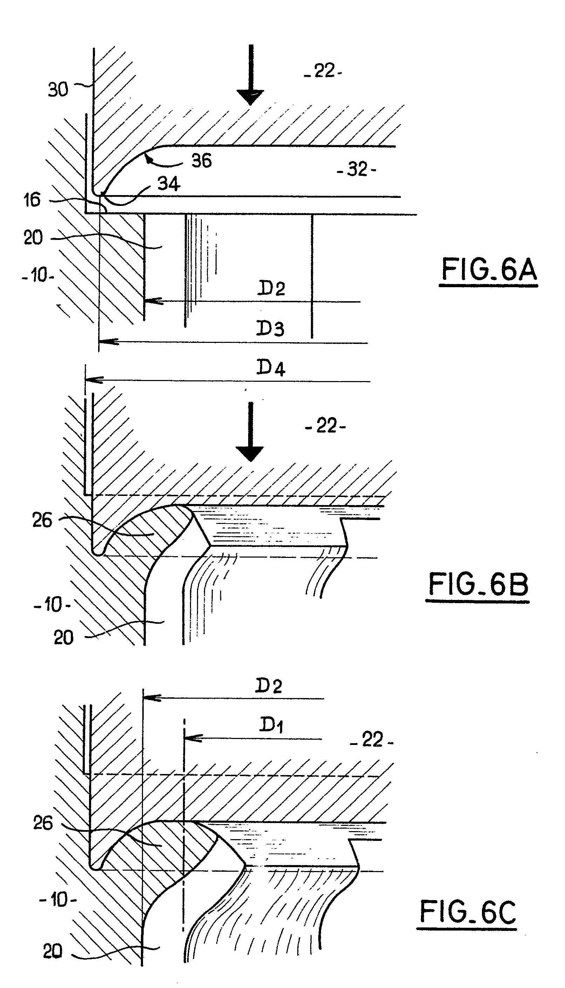

Les figs 6A, 6B et 6C illustrent à échelle très agrandie et en trois temps successifs le processus de refoulement de matière qui aboutit à la formation des bourrelets annulaires destinés à fermer les extrémités des rainures longitudinales 20. Elles précisent par ailleurs la conformation donnée aux poinçons dans une forme de réalisation préférentielle d'un outillage pour la mise en œuvre du procédé de l'invention. Ainsi qu'il ressort de ces dessins, chacun des poinçons 22 et 24 possède un bord droit 30 dont le diamètre extérieur est sensiblement égal au plus grand diamètre $D_4$ de l'épaulement annulaire correspondant 16, ces deux diamètres présentant simplement entre eux un jeu radial suffisant pour permettre le libre engagement du poinçon dans l'ébauche de douille. La face d'attaque du poinçon inclut d'autre part une empreinte centrale 32 de faible profondeur, dont le fond plat se raccorde à l'arête périphérique 34 du poinçon par un élément de surface concave 36 de relativement large rayon de courbure. Le diamètre moyen $D_3$ de l'arête périphérique 34 est ainsi sensiblement supérieur au diamètre $D_2$ du fond des rainures 20 pré-usinées dans l'ébauche de douille 10. Lors de la pénétration du poinçon 22 dans l'épaulement annulaire 16 (fig. 6B), la pression se trouve ainsi appliquée sur une zone annulaire de cet épaulement dont le diamètre moyen est supérieur au diamètre $D_2$ du fond des rainures, et l'élément de surface concave 36 ainsi que le fond de l'empreinte centrale 32 contribuent à guider en direction de l'axe de la douille la matière refoulée par la pénétration du poinçon 22. La fig. 6C illustre la position du poinçon 22 en fin d'opération, le bourrelet annulaire 26 incluant alors une portion continue de hauteur radiale au moins égale à celle des rainures longitudinales 20 (et correspondant à la demi-différence entre les diamètres $D_2$ et $D_1$), ainsi qu'une portion marginale dentelée qui sera éliminée au cours de l'opération subséquente d'alésage de l'ébauche de douille 10 au diamètre intérieur $D_1$. On comprend dès lors que les rainures longitudinales 20 sont effectivement fermées à leurs deux extrémités par les bases tronquées des bourrelets annulaires 26 et 28. La douille terminée d'usinage présente bien ainsi l'aspect représenté à la fig. 5 des dessins.

Il doit être bien entendu que le mode d'exécution du procédé selon l'invention qui a été décrit ci-dessus n'en représente qu'une des possibilités de mise en œuvre, et qu'il serait possible de recourir à d'autres moyens pour obtenir le refoulement de matière générateur des bourrelets annulaires de fermeture des rainures de la douille. De même, le procédé de l'invention pourrait tout aussi bien s'appliquer au cas de douilles munies de rainures intérieures de direction inclinée par rapport à leur axe. Il pourrait également s'appliquer au cas où les rainures dont est pourvue la douille ne doivent être fermées qu'à l'une seulement de leurs extrémités, un seul poinçon étant utilisé dans cette hypothèse. En outre, la portée de l'invention ne doit pas être considérée comme restreinte au cas exclusif d'une douille cylindrique de section circulaire, même si celui-ci représente l'essentiel de son domaine d'application; le terme «cylindrique» doit être au contraire entendu dans son acception la plus générale, selon la définition qui en est donnée en géométrie classique.

## Revendications

1. Procédé de fabrication d'une douille cylindrique munie de rainures intérieures d'orientation longitudinale droite ou faiblement inclinée, fermées à l'une au moins de leurs extrémités, comprenant les étapes de définir un alésage axial dans une ébauche de douille (10) en matériau déformable, de former des rainures (20), par exemple par brochage, dans l'alésage axial qui comporte au moins une face d'extrémité constituant un épaulement (16) au niveau duquel les rainures débouchent, de refouler de la matière au niveau de l'épaulement en direction de l'axe de la douille par application d'une pression pour constituer une zone annulaire déformée dont la face intérieure est décalée vers l'axe d'une distance radiale supérieure à la profondeur des rainures que l'on désire obtenir, et d'aléser la douille au diamètre intérieur désiré en éliminant une partie de cette zone annulaire déformée; caractérisé en ce que ladite zone est déformée de manière à constituer un bourrelet annulaire interne (26), en ce que la pression est appliquée longitudinalement en bout de la douille sur une zone annulaire de l'épaulement, le diamètre moyen de cette dernière zone étant supérieur au diamètre ($D_2$) d'un cylindre dans lequel s'inscrivent sensiblement les fonds desdites rainures (20), et en ce que simultanément, la matière refoulée est guidée en direction de l'axe de la douille.

2. Procédé selon la revendication 1, caractérisé en ce que le refoulement par application en bout de la douille d'une pression longitudinale est effectué à l'aide d'au moins un poinçon (22) dont la face d'attaque se compose d'une arête périphérique (34) sensiblement circulaire et d'une empreinte centrale (32) de faible profondeur dont le fond plat se raccorde à ladite arête périphérique par une portion de surface concave (36) assurant le guidage vers l'axe du bourrelet en formation, le diamètre moyen ($D_3$) de l'arête périphérique étant sensiblement supérieur au diamètre ($D_2$) du cylindre dans lequel s'inscrivent les fonds des rainures (20).

3. Douille munie de rainures intérieures fermées à l'une au moins de leurs extrémités obtenue par la mise en œuvre du procédé selon la revendication 1 ou la revendication 2.

## Claims

1. A method of manufacturing a cylindrical sleeve with inner grooves, closed at least at one end, said grooves being straight or slightly inclined and oriented in longitudinal direction, comprising the steps of forming an axial bore in a sleeve blank made from deformable material, forming grooves in the axial bore, e.g. in a broaching step, said axial bore having at least one end face forming a shoulder (16), where the grooves merge, displacing material at said shoulder in the direction of the sleeve axis by applying pressure so as to form a deformed annular zone, the inner surface of which is displaced towards the axis by a radial distance being greater than the depth of the grooves desired, and boring of the sleeve to the desired inner diameter taking away a portion of said deformed annular zone, characterized in that said zone is deformed in such manner that an inner circular bead (26) is obtained, in that the pressure is applied to the end of the sleeve in longitudinal direction across an annular area of said shoulder, the average diameter of said area being greater than the diameter ($D_2$) of a cylinder essentially defining the site of the bottom walls of said grooves (20), and in that the displaced material is simultaneously guided in the direction of the sleeve axis.

2. The method as in claim 1, characterized in that displacement of the material by application of longitudinal pressure to the end of the sleeve is effected using a die (22), the working end face of which is composed of a peripheral edge (34) of essentially circular shape and of a central shallow recess (32), the flat bottom of which is connected to said peripheral edge by intermediary of a concave surface portion (36) adapted to guide the bead under formation towards the axis, the average diameter ($D_3$) of the peripheral edge being sensibly greater than the diameter ($D_2$) of the cylinder defining the site of the bottom walls of said grooves (20).

3. A sleeve with inner grooves, closed at least at one end manufactured by the process in accordance with claim 1 or 2.

## Patentansprüche

1. Verfahren zum Herstellen einer zylindrischen Hülse mit innenliegenden geraden oder schwach geneigten longitudinalen Nuten, welche zumindest an einem ihrer Enden verschlossen sind, mit folgenden Verfahrensschritten: Herstellen einer axialen Bohrung in einem Hülsenrohling aus verformbarem Material, Ausbilden der Nuten in der axialen Bohrung, beispielsweise durch Broschieren, wobei die axiale Bohrung zumindest eine Endfläche hat, die eine Schulter bildet, auf deren Höhe die Nuten ausmünden, Verdrängen des Materials auf Höhe der Schulter in Richtung der Hülsenachse durch Ausübung von Druck, so dass man einen verformten ringförmigen Bereich erhält, dessen innenliegende Fläche in Richtung zur Achse um eine radiale Strecke verschoben ist, die grösser ist als die Tiefe der Nuten, welche man erhalten will, und Aufbohren der Hülse auf den gewünschten Innendurchmesser unter Entfernen eines Teiles des verformten ringförmigen Bereiches, dadurch gekennzeichnet, dass der ringförmige Bereich derart verformt wird, dass man einen innenliegenden Ringwulst (26) erhält, und dass der Druck in longitudinaler Richtung am Ende der Hülse auf eine Ringfläche der Schulter ausgeübt wird, wobei der mittlere Durchmesser dieser Ringfläche grösser ist als der Durchmesser ($D_2$) eines Zylinders, auf welchem im wesentlichen die Bodenflächen der Nuten (20) liegen, und dass das verdrängte Material gleichzeitig in Richtung der Hülsenachse geführt ist.

2. Verfahren nach Anspruch 1, dadurch gekennzeichnet, dass das Verdrängen von Material durch endseitiges Beaufschlagen der Hülse mit longitudinal gerichteter Druckkraft unter Verwendung mindestens eines Stempels (22) erfolgt, dessen Arbeits-Stirnfläche eine in Umfangsrichtung verlaufende im wesentlichen kreisförmige Kante (32) und eine mittige Vertiefung (32) geringer Tiefe aufweist, wobei der ebene Boden der letzteren mit der in Umfangsrichtung verlaufenden Kante durch einen konkaven Oberflächenabschnitt (36) verbunden ist, welcher das Führen des in Bildung begriffenen Wulstes zur Achse hin besorgt, wobei der mittlere Durchmesser ($D_3$) der in Umfangsrichtung verlaufenden Kante deutlich grösser ist als der Durchmesser ($D_2$) des Zylinders, auf welchem die Bodenflächen der Nuten (20) liegen.

3. Hülse, welche zumindest an einem ihrer Enden mit innenliegenden geschlossenen Nuten versehen ist, hergestellt durch Anwendung des Verfahrens nach Anspruch 1 oder Anspruch 2.

# FIG.1

ETAT DE LA TECHNIQUE

# FIG.2

ETAT DE LA TECHNIQUE

# FIG.3

# FIG.4

# FIG.5

FIG.6A

FIG.6B

FIG.6C